# EUROPEAN PATENT SPECIFICATION

(11) **EP 1 543 948 B1**
(45) Date of publication and mention of the grant of the patent: **26.07.2017**
(21) Application number: 03738553.1
(22) Date of filing: 27.06.2003
(51) Int. Cl.: B32B 7/02, C09D 5/24, C09D 7/12, C09D 201/00

(54) **ANTISTATIC MOLDED ARTICLE AND ANTISTATIC PAINT**
ANTISTATISCHER FORMKÖRPER UND ANTISTATISCHE FARBE
ARTICLE MOULE ANTISTATIQUE ET PEINTURE ANTISTATIQUE

(30) Priority: 17.07.2002 JP 2002208660
(43) Date of publication of application: 22.06.2005
(73) Proprietor: SEKISUI CHEMICAL CO., LTD., Osaka-shi, Osaka 530-8565 (JP)
(72) Inventor: OTSUKA, Toshiharu, c/o Sekisui Chemical Co., Ltd., Ritto-shi, Shiga 520-3081 (JP); SONKU, Masahisa, c/o Sekisui Kanzai Tech. Co. Ltd., Ritto-shi, Shiga 520-3081 (JP); MIZUKAMI, Masayuki, c/o Sekisui Chemical Co., Ltd., Ritto-shi, Shiga 520-3081 (JP)
(74) Representative: Hart-Davis, Jason
(86) International application number: PCT/JP2003/008190
(87) International publication number: WO 2004/007189

(56) References cited:
- EP-A- 0 592 061
- EP-A- 1 154 000
- JP-A- 3 082 535
- JP-A- 3 082 537
- JP-A- 5 239 409
- JP-A- 7 308 997
- JP-A- 61 057 660
- JP-A- 62 004 761
- JP-A- 62 270 335
- DATABASE WPI Week 200420 Thomson Scientific, London, GB; AN 2004-205734 XP002529817 -& JP 2003 145689 A (TORAY IND INC) 20 May 2003 (2003-05-20)

## Description

### FIELD OF THE INVENTION

The invention relates to producing a molded body with an antistatic coating material, which has an excellent antistatic property.

### BACKGROUND ART

Recently, in electric and electronic industries of mainly semiconductor fabrication, food industries, and medical and pharmaceutical industries, contamination with even a slight amount of foreign substances such as dirt and dust is a serious issue with respect to the quality control and therefore some processes require to be carried out in clean environments with scarce dirt and dust, however to keep such clean environments, generation of static electricity which adsorbs dirt and dust becomes an obstacle and accordingly articles to be used in the clean environments are required to have an antistatic property. Also, since electric parts tend to easily cause functional breakdown owing to static electricity, they are required similarly to have an antistatic property.

As the method for providing articles, particularly synthetic resin molded products, with the antistatic property are there a method of adding a conductive filler such as a carbon black, a metal powder, and a conductive metal oxide, a surfactant to materials comprising the articles and a method of forming an antistatic layer containing a conductive filler or an antistatic layer obtainable by a surfactant on the article surface. However, the above-mentioned respective methods had problems. That is, with respect to the method of adding the conductive filler to materials comprising the articles, a large quantity of the conductive filler had to be added to obtain a good antistatic property and accordingly there were the problems that the moldability of the articles was deteriorated, the articles became opaque or it became difficult to colorize the articles with optional colors. Also, with respect to the method of adding the surfactant to materials comprising the articles, there was a disadvantage that the conductivity was too low to provide a sufficient antistatic property and the antistatic property was sensitive to ambient humidity.

Further, with respect to the method of forming an antistatic layer comprising the surfactant on the article surface, there was a problem that the antistatic property was insufficient and the antistatic layer containing the surfactant was eliminated by washing with water or alcohol and thus was easy to be removed by friction and lacks in durability.

On the other hand, as a method of forming the antistatic layer containing the conductive filler on the article surface is there, for example, a method of applying an antistatic coating material containing conductive metal oxide fine particles to the article surface. However, such a coating material containing a large quantity of fine particles showed a thixotropic property, so that the smooth coating formation was interfered and application to articles required to be transparent was limited. That is, since coating had to be carried out by using a roll coater or the like under strong shearing force application condition to improve the surface smoothness and transparency and therefore the coating method was limited and post-treatment such as buff polishing (reference to Japanese Kokoku Publication Sho-63-33778), specular hot press (Japanese Kokoku Publication Hei-6-15071) had to be carried out additionally after coating.

Additionally, these methods were effective for flat articles such as plate-like or film-like articles, however in the case of molded bodies having concave and convex parts, curved faces, or complicated three-dimensional shapes such as container-like shapes, coating by a roll coater while applying shearing force or post-treatment by buff polishing or the like was difficult and consequently, no antistatic molded body excellent in transparency, surface smoothness, and durability had been made available so far.

Further, a method of press-molding or vacuum-molding a plate with the antistatic layer previously formed on the surface was generally employed as a method of producing an antistatic molded body with such a complicated shape as described above, however there was a problem that in the case of molding the plate with the antistatic layer formed on the surface, the antistatic layer on the portion to be deformed could not follow the deformation and therefore the antistatic property was deteriorated.

According to EP 1 154 000 A1, a paint for forming a transparent conductive thin film having specific conductive oxide powder and binder blending ratios to easily obtain a transparent conductive thin film comprising a surface resistivity of no greater than 9 x 10¹¹ Ω/□, a total light permeability of at least 80%, and a haze value of no greater than 5% may be used to coat the paint for forming a transparent conductive thin film onto the surface of a substrate by spin coating, dip coating, spray coating, flow coating, bar coating, gravure coating or the like.

According to JP-A-H05 239409, a conductive coating material is spray-coated onto substrates, such as glass and ceramics, and is then ultraviolet ray-irradiated and hardened.

### SUMMARY OF THE INVENTION

In view of the above-mentioned state of the art, it is the object of the invention to provide an antistatic molded body excellent in an antistatic property obtained simply by applying an antistatic coating material to a substrate without deteriorating the surface smoothness, the transparency and coloration of the substrate and particularly to provide a method for forming an antistatic layer of an antistatic molded body comprising a substrate having concave and convex parts with an three-dimensional complicated shape and an antistatic layer formed thereon excellent in transparency, surface smoothness, and antistatic property, easyly applied, and unnecessary to be post-treated.

The invention is defined in claim 1 and is a method for forming an antistatic layer of an antistatic molded body comprising the antistatic layer comprising an antistatic coating material containing a conductive metal oxide on the surface of a substrate and having a surface resistivity of 1×10⁴ to 1×10⁹ Ω/□ and the surface roughness (Ra) of 5 to 50 nm, having a haze value of 10% or lower and a total light transmittance of 84% or higher.

A three-dimensional body having concave and convex parts is provided with the antistatic layer of the antistatic molded body by simply spraying an antistatic coating material.

The antistatic coating material to be used for the antistatic molded body in the invention is a coating material which contains a conductive metal oxide fine particle, a binder resin and an organic solvent and in which a solid matter concentration is 1 to 20% by weight, a content of said conductive metal oxide fine particle in said solid matter is 50 to 80% by weight, an average particle diameter of said conductive metal oxide fine particle is 100 nm or smaller, and a content of said conductive metal oxide fine particle with a particle diameter of 200 nm or larger is 10% by weight or less.

The conductive metal oxide or the conductive metal oxide fine particle is tin oxide.

The antistatic coating material has the viscosity of 5 to 30 cps.

### DETAILED DESCRIPTION OF THE INVENTION

Hereinafter, the invention will be described in detail.

An antistatic molded body comprises an antistatic layer comprising an antistatic coating material containing a conductive metal oxide on the surface of a substrate.

As the above-mentioned conductive metal oxide fine particles, tin oxide such as an antimony-containing conductive tin oxide and indium tin oxide is used and particularly, antimony-containing conductive tin oxide is preferable. Also, as the above-mentioned conductive metal oxide fine particles, compounded fine particles obtained by forming a conductive metal oxide layer on the surface of transparent fine particles can be employed. As such compounded fine particles, conductive fine particles obtained by forming a layer comprising antimony-containing conductive tin oxide on the surface of fine particles of barium sulfate are commercialized.

As the conductive metal oxide fine particles to be added to the above-mentioned antistatic coating material, since it is required to be finely dispersed in the coating material, those having an average particle diameter of 100 nm or smaller, preferably 50 nm or smaller before addition to the coating material are to be used. The conductive metal oxide fine particles are dispersed in such a manner as that an average particle diameter thereof is 100 nm or smaller in the above-mentioned antistatic coating material and the content of particles with particle diameter of 200 nm or larger is 10% by weight or less in the total of the conductive metal oxide fine particles. In the case the average particle diameter of the conductive metal oxide fine particles exceeds 100 nm or the content of the particles with a particle diameter of 200 nm or larger exceeds 10% by weight, the surface of the coating film becomes rough and it is difficult to form an antistatic layer with an even thickness and smooth surface. Particularly, in the case the substrate is colored or transparent, if the obtained antistatic layer is opaque, the color of the obtained antistatic molded body becomes unclear or opaque. The average particle diameter of the conductive metal oxide fine particles in the above-mentioned antistatic coating material is a value calculated by diluting the antistatic coating material with a solvent and subjecting the diluted material to a light scattering method and an average particle diameter of particles including primary particles and agglomerates. The conductive metal oxide fine particles with a particle diameter of 200 nm or larger also include agglomerates formed by agglomeration of a plurality of primary particles. More preferable average particle diameter is 50 nm or smaller and more preferable content of particles with a particle diameter of 200 nm or larger is 5% by weight or less.

The content of the conductive metal oxide fine particles in the above-mentioned antistatic coating material is 50 to 80% by weight in the solid matter of the coating material. If it is less than 50% by weight, the antistatic property is sometimes insufficient and even if it is added more than 80% by weight, the antistatic property to be obtained is not so sufficient as to correspond to the addition amount and further it becomes difficult to disperse the particles in such a manner of keeping the average particle diameter be 100 nm or smaller.

The above-mentioned binder resin is not particularly limited and resins such as vinyl chloride resin, polyester resin, acrylic resin, which are commonly used as a binder for a lacquer type coating material, and reactive resins such as UV curable resin and thermosetting resin can be exemplified.

As the above-mentioned organic solvent, any solvents which dissolve the above-mentioned binder resin and which do not interfere the dispersibility of the above-mentioned conductive metal oxide fine particles may be used without any particular limitation and examples of the solvent include ketones such as methyl ethyl ketone, methyl isobutyl ketone, and cyclohexanone; acetic acid esters such as ethyl acetate and butyl acetate; and aromatic hydrocarbon compounds such as toluene and xylene. These solvents may be selected properly corresponding to the type of the binder resin and requirements of coating properties and they may be used alone or two or more of them may be used in combination.

The solid matter concentration of the above-mentioned antistatic coating material is 1 to 20% by weight. If it is less than 1% by weight, the adhesion amount of the coating material has to be large and accordingly, the coating material is fluidized so much as to cause a problem of dripping or the like. On the other hand, if it exceeds 20% by weight, thixotropic property is intensified and the coating film surface is roughened and no antistatic layer with an even thickness and smooth surface can be obtained and particularly in the case of forming a coating by spray coating, the coating film surface is made concave and convex by the splashes, and therefore the transparency of the antistatic layer is deteriorated. Adjustment of the solid matter concentration to be 1 to 20% by weight gives an antistatic layer which is transparent and has a smooth surface can be obtained without requiring post-treatment such as buff finishing or the like. The more preferable lower limit is 5% by weight and the more preferable upper limit is 10% by weight. The above-mentioned solid matters mean mainly the above-mentioned binder resin and the above-mentioned conductive metal oxide fine particles.

The above-mentioned antistatic coating material has a viscosity of 5 to 30 cps. If the viscosity is 5 to 30 cps, coating by spray coating becomes easy. In addition, the above-mentioned viscosity is a value measured by a B-model viscometer under conditions of 20°C, rotor No. 2, and rotation speed 50 rpm.

The antistatic layer of the antistatic molded body is formed by applying the above-mentioned antistatic coating material to the substrate surface.

The method for applying the above-mentioned antistatic coating material to the substrate surface is a spray method and can provide a good antistatic layer. For a substrate with a three-dimensional body like a container-like shape having complicated concave and convex parts, e.g. an concave and convex surface or curved face, the spray method is suitable. The spray method can make the thickness of the coating relatively easily uniform even if the substrate has a complicated shape. Therefore, a coating with a uniform thickness can be obtained by the spray method and thus a transparent antistatic layer with a smooth surface can be formed only by spray coating of the antistatic coating material without requiring post-treatment such as buff finishing.

The thickness of the above-mentioned antistatic layer is not particularly limited, however, the thickness after drying the coating is preferably 0.2 to 10 µm. If it is thinner than 0.2 µm, the smoothness of the surface of the antistatic layer is affected by the surface state of the substrate and becomes inferior, and therefore the antistatic property becomes insufficient. On the other hand, if it exceeds 10 µm, the transparency of the antistatic layer is deteriorated.

The substrate of the antistatic molded body is not particularly limited and may include molded bodies obtainable by synthetic resins including polyolefin resins such as polyethylene resin and polypropylene resin; thermoplastic resins such as vinyl chloride resin, acrylic resin, polycarbonate resin, polystyrene resin, and polyester resin such as polyethylene terephthalate; and thermosetting resins such as phenol resin and epoxy resin; and inorganic substances such as glass and they may be properly selected depending on the uses, however in terms of lightweight and moldability and the like, molded bodies obtainable by synthetic resins are preferable.

If the substrate is a three-dimensional body having concave and convex parts such as curved faces and bent portions, the invention is particularly suitable for using.

The molding method of the substrate is not particularly limited and, for example, injection molding, vacuum molding, extrusion molding, and press molding can be exemplified.

The antistatic molded body has a surface resistivity of 1×10⁴ to 1×10⁹ Ω/□. If it is lower than 1×10⁴ Ω/□, the antistatic property is not a problem, however depending on the use, the conductivity is so high as to cause undesirable incident such as device breakdown owing to electric discharge in the case of a container of a semiconductor device. On the other hand, if it exceeds 1×10⁹ Ω/□, the antistatic property becomes insufficient. In addition, the above-mentioned surface resistivity is a value calculated according to JIS K 6911 and in the case the shape of the antistatic molded body is complicated, it can be calculated by measuring the resistance between electrodes by a high resistance measuring apparatus and converting the measured resistance into the surface resistivity value.

The surface roughness (Ra) of the antistatic molded body is 5 to 50 nm. If it is lower than 5 nm, the post-treatment such as surface finishing is required and if it exceeds 50 nm, there are the problems that the transparency of the antistatic molded body is deteriorated and no smooth surface can be obtained. In addition, the above-mentioned surface roughness (Ra) is the arithmetic means roughness calculated according to JIS B 0601.

The haze value is 10% or lower. If it exceeds 10%, the transparency of the antistatic molded body is deteriorated. A more preferable upper limit is 5%. The haze value of the antistatic molded body is affected by the haze value of the substrate itself, however in a typical example of the invention, the haze value of the antistatic molded body of the invention is suppressed to be higher than that of the substrate by at most 3%. In addition, the haze value is a value calculated according to JIS K7105.

The antistatic molded body has a total light transmittance of 84% or higher. If it is less than 84%, depending on the uses, the transparency of the antistatic molded body is insufficient. To make the total light transmittance 84% or higher, a molded body obtainable by transparent resin such as acrylic resin, e.g. PMMA and polycarbonate resin, e.g. PC is preferable to be used as the substrate. The total light transmittance of the antistatic molded body is also affected by the total light transmittance of the substrate similarly to the haze value and the decrease of it can be suppressed within 10% of the total light transmittance of the substrate in a typical example. In addition, the above-mentioned total light transmittance can be a value calculated according to JIS K 7105, similarly to the haze value.

The use of the antistatic molded body is not particularly limited, however, for example, it is used preferably for a wafer container, a photomask container, a door and cover of a precision production apparatus of a semiconductor, a luminaire cover.

Conventionally, in the case of applying a coating material containing conductive metal oxide fine particles dispersed therein particularly by a spray method, it is generally difficult to obtain a transparent coating with smooth surface. The reasons for that are supposed as follows.

The first reason is that the particle diameter of the agglomerates of the conductive metal oxide fine particles is large. The conductive metal oxide fine particles with an average particle diameter of primary particles of several ten nm are used for a transparent antistatic coating material, however it is very difficult to disperse the above-mentioned conductive metal oxide fine particles in primary particle state and in general, the particles exist in form of agglomerates formed by agglomeration of a large number of primary particles. If the particle diameter of the above-mentioned agglomerates is large, since light scattering is increased and the coating surface becomes concave and convex, it is impossible to obtain a transparent and smooth coating. Further, in the case of spray coating, splashes are brought into contact fiercely with air while flying in air, and the coating material is deprived of the evaporation latent heat and absorbs moisture, and attributed to that, further larger agglomerates of the conductive metal oxide fine particles are produced and accordingly the transparency and smoothness of the coating tend to be deteriorated.

The second reason is because the sprayed splashes are adhered on the substrate surface and dried and solidified before being sufficiently leveled and therefore concave and convex traces of the splashes are left on the coating surface. It occurs commonly in spray coating that the traces of splashes are easy to remain on the coating surface, however the tendency is significant in the case of the antistatic coating material containing a large quantity of the conductive metal oxide fine particles. The reason for that is supposed because the coating material has a thixotropic property.

To deal with that problem, in the invention, the solid matter concentration in the antistatic coating material is suppressed to low and the conductive metal oxide fine particles with an average particle diameter of 100 nm or smaller and containing particles with a particle diameter of 200 nm or larger in a content of 10% by weight or less are used in the antistatic coating material and thus the antistatic layer with excellent transparency and surface smoothness can be formed on a substrate by simply spray coating without requiring post-treatment.

### BEST MODES OF THE EMBODIMENTS OF THE INVENTION

The invention will be described in further detail by way of Examples, but is not limited by these Examples.

### <Example 1>

### [Production of substrate]

A 2 mm-thick transparent acrylic plate was formed into a bowl-like shape with a curvature radius of 10 cm by a vacuum molding method. The haze value of the substrate itself of the transparent acrylic resin was 3% and the total light transmittance was 91% after molding.

### [Production of antistatic coating material]

A bead mill filled with beads having a diameter of 0.3 mm and made of zirconia was filled with cyclohexanone 63 parts by weight and a vinyl chloride copolymer (trade name: MR-110, manufactured by ZEON Corporation) 14 parts by weight, rotated at a rotation speed of 100 rpm for 10 minutes and then the vinyl chloride copolymer was dissolved in the solvent. After that, an antimony-doped tin oxide powder (trade name: T-1; manufactured by Mitsubishi Materials Corporation; primary particle diameter 20 nm) 23 parts by weight was added little by little. After the addition, the rotation speed was increased to 2,300 rpm and the mixture was stirred for 4 hours to obtain a raw solution of an antistatic coating material. The obtained coating material raw solution was diluted with cyclohexanone and then an antistatic coating material with a solid matter concentration of 10% by weight was obtained.

### [Application to the substrate]

The diluted coating material was applied to the above-mentioned substrate by spray coating so as to adjust the average coating amount of 40 g/m² and dried at 60°C for 20 minutes by hot air blow to obtain an antistatic molded body.

### <Example 2>

An antistatic molded body was obtained in the same manner as Example 1, except that the solid matter concentration of the coating material was adjusted to be 3% by weight and the coating amount was changed to 100 g/m².

### <Example 3>

An antistatic molded body was obtained in the same manner as Example 1, except that the addition amount of the vinyl chloride copolymer was 12 parts by weight, the addition amount of the antimony-doped tin oxide powder was 25 parts by weight, the solid matter concentration of the coating material was adjusted to be 5% by weight, and the coating amount of the coating material was changed to 80 g/m².

### <Example 4>

An antistatic molded body was obtained in the same manner as Example 1, except that the stirring time at a rotation speed of 2,300 rpm was prolonged to 7 hours.

### <Comparative Example 1>

### [Production of antistatic coating material]

An antistatic coating material was produced in the same manner as Example 1, except that the stirring time at a rotation speed of 2,300 rpm was shortened to 30 minutes.

### [Application to the substrate]

After the antistatic molded body was produced in the same manner as Example 1, buff finishing was carried out as the post-treatment.

### <Comparative Example 2>

An antistatic molded body was obtained in the same manner as Example 1, except that the solid matter concentration of the coating material was adjusted to be 30% by weight.

### <Comparative Example 3>

An antistatic molded body was obtained in the same manner as Comparative Example 1, except that the buff finishing was not carried out.

### [Evaluation]

The antistatic coating materials and the antistatic molded bodies obtained in the respective Examples and Comparative Examples were evaluated for the following items. The results are shown in Table 1.

### (Particle diameter of tin oxide fine particles)

Each antistatic coating material was diluted with methyl ethyl ketone and the particle diameter was measured by a particle distribution meter (HORIBA LA-910, manufactured by HORIBA SEISAKUSHO CO., Ltd.) by a laser scattering method.

### (Surface resistivity)

Resistance was measured at 5 points of the surface of each antistatic molded body by a high resistance meter (TR-3; manufactured by TOKYO ELECTRONICS CO., LTD.) and then surface resistivity was calculated. Its range is shown in Table 1.

### (Surface roughness (Ra))

The surface roughness (Ra) of each antistatic molded body was calculated by a surface shape measurement apparatus (SURFCOM 480, manufactured by TOKYO SEIMITSU CO., LTD.).

### (Haze value and total light transmittance)

A specimen with 5 cm × 10 cm size was cut off from each antistatic molded body and subjected to the haze value and total light transmittance measurements for the antistatic molded body by a haze meter (ND-1001DP, manufactured by Nippon Denshoku Industries Co., Ltd.)

### (Viscosity of coating material)

Viscosity was measured at 20°C and on the condition of a rotation speed of 50 rpm with a rotor No. 2 by a B-type viscometer (B 8 H, manufactured by Tokyo Keiki Co., Ltd.).

**Table 1**

| | | | **Example 1** | **Example 2** | **Example 3** | **Example 4** | **Comparative Example 1** | **Comparative Example 2** | **Comparative Example 3** |
|---|---|---|---|---|---|---|---|---|---|
| Solid matter concentration (in coating material) | | wt% | 10 | 3 | 5 | 5 | 10 | 30 | 10 |
| Tin oxide content (in solid matters) | | wt% | 62 | 62 | 68 | 68 | 62 | 62 | 62 |
| Tin oxide dispersion state | average particle diameter | nm | 90 | 90 | 92 | 70 | 180 | 90 | 180 |
| | content of particles with particle diameter of 200 nm or larger | wt% | 7 | 7 | 8 | 3 | 35 | 7 | 35 |
| Viscosity of antistatic coating material | | cps | 25 | 12 | 16 | 20 | 22 | 147 | 22 |
| Performance of buff finishing | | | none | none | none | none | done | none | none |
| Evaluation result | surface resistivity | × 10⁶Ω/□ | 20∼80 | 40∼90 | 3∼6 | 50∼90 | 3∼6 | 20∼80 | 3∼6 |
| | surface roughness (Ra) | nm | 35 | 30 | 39 | 32 | 5 | 777 | 65 |
| | haze value | % | 5 | 4 | 6 | 4 | 4 | 35 | 28 |
| | total light transmittance | % | 86 | 87 | 84 | 84 | 87 | 83 | 84 |

### INDUSTRIAL APPLICABILITY

With the above-mentioned constitution, the invention provides a method for producing an antistatic molded body excellent in the antistatic property, transparency, and surface smoothness obtainable by simply applying an antistatic coating material to a substrate without requiring additional post-treatment such as buff finishing even if the substrate has concave and convex parts and complicated three-dimensional shape and the obtained antistatic molded body is preferably utilized for facilities, parts and the like to be used in clean rooms.

Use of the antistatic coating material in the method of claim 1 makes it possible to provide a coating excellent in the antistatic property, transparency, and surface smoothness by simply applying it to a substrate by spray method without requiring complicated post-treatment such as buff finishing and suitable for preventing electrostatic charge on a molded body with a complicated shape.

## Claims

1. A method for forming an antistatic layer of an antistatic molded body,
which comprises the antistatic layer comprising an antistatic coating material containing a conductive metal oxide on a surface of a substrate and has a surface resistivity of 1×10⁴ to 1×10⁹ Ω/□ and a surface roughness Ra) of 5 to 50 nm, wherein a haze value is 10% or lower and a total light transmittance is 84% or higher,
by spraying to the substrate having a three-dimensional body having concave and convex parts and then drying the antistatic coating material,
which contains a conductive metal oxide fine particle, a binder resin and an organic solvent and has a solid matter concentration of 1 to 20% by weight and a content of said conductive metal oxide fine particle in said solid matter of 50 to 80% by weight,
an average particle diameter of said conductive metal oxide fine particle being 100 nm or smaller, and a content of said conductive metal oxide fine particle with a particle diameter of 200 nm or larger being 10% by weight or less
wherein the conductive metal oxide fine particle is tin oxide and the antistatic coating material has a viscosity of 5 to 30 cps (mPa.s) measured by a B-model viscometer under conditions of 20°C, rotor no. 2, and rotation speed 50rpm, and the average particle diameter is measured in a dilution of the antistatic coating material in methyl ethyl ketone by a particle distribution meter by a laser scattering method.

## Patentansprüche

1. Verfahren zum Ausbilden einer antistatischen Schicht auf einem antistatischen Formkörper,
der die antistatische Schicht umfasst, die ein antistatisches Beschichtungsmaterial umfasst, das ein leitfähiges Metalloxid auf einer Oberfläche eines Substrates enthält und einen Oberflächenwiderstand von 1x10⁴ bis 1x10⁹ Ω/□ und eine Oberflächenrauigkeit (Ra) von 5 bis 50 nm aufweist, wobei ein Haze-Wert 10 % oder weniger und eine Gesamtlichttransmission 84 % oder mehr beträgt,
mittels Aufsprühen des antistatischen Beschichtungsmaterials auf das Substrat, das einen dreidimensionalen Körper mit konkaven und konvexen Teilen hat, und dann Trocknen dieses Materials,
das einen leitfähigen Metalloxidfeinpartikel, ein Bindemittelharz und ein organisches Lösungsmittel enthält und das eine Feststoffkonzentration von 1 bis 20 Gewichts-% und einen Gehalt an dem leitfähigen Metalloxidfeinpartikel in dem Feststoff von 50 bis 80 Gewichts-% aufweist,
wobei ein durchschnittlicher Partikeldurchmesser des leitfähigen Metalloxidfeinpartikels 100 nm oder weniger beträgt und ein Gehalt an dem leitfähigen Metalloxidfeinpartikel mit einem Partikeldurchmesser von 200 nm oder mehr 10 Gewichts-% oder weniger beträgt,
wobei der leitfähige Metalloxidfeinpartikel Zinnoxid ist und das antistatische Beschichtungsmaterial eine Viskosität von 5 bis 30 cps (mPa. s) aufweist, die mittels eines B-Model-Viskometers unter Bedingungen von 20 °C, Rotor Nr. 2 und einer Rotationsgeschwindigkeit von 50 Upm gemessen ist, und der durchschnittliche Partikeldurchmesser in einer Verdünnung des antistatischen Beschichtungsmaterials in Methylethylketon mittels eines Partikelverteilungsmessgerätes mittels eines Laserstreuungsverfahrens gemessen ist.

## Revendications

1. Procédé de formation d'une couche antistatique d'un corps moulé antistatique,
lequel comprend la couche antistatique comprenant un matériau de revêtement antistatique contenant un oxyde de métal conducteur sur une surface d'un substrat et présente une résistivité de surface de 1x10⁴ à 1x10⁹ Ω/□ et une rugosité de surface Ra) de 5 à 50 nm, dans lequel une valeur de voile est de 10 % ou inférieure et un coefficient de transmission de lumière total est de 84 % ou supérieur,
par pulvérisation sur le substrat présentant un corps tridimensionnel ayant des parties concave et convexe et ensuite séchage du matériau de revêtement antistatique,
lequel contient une fine particule d'oxyde de métal conducteur, une résine de liant et un solvant organique et présente une concentration en matière solide de 1 à 20 % en masse et une teneur de ladite fine particule d'oxyde de métal conducteur dans ladite matière solide de 50 à 80 % en masse,
un diamètre moyen de particule de ladite fine particule d'oxyde de métal conducteur étant de 100 nm ou inférieur, et une teneur de ladite fine particule d'oxyde de métal conducteur avec un diamètre de particule de 200 nm ou supérieur étant de 10 % en masse ou inférieure
dans lequel la fine particule d'oxyde de métal conducteur est de l'oxyde d'étain et le matériau de revêtement antistatique présente une viscosité de 5 à 30 cps (mPa.s) mesurée par un viscosimètre de modèle B dans des conditions de 20°C, n° de rotor 2, et vitesse de rotation 50 tr/min, et le diamètre moyen de particule est mesuré dans une dilution du matériau de revêtement antistatique dans de la méthyléthylcétone par un dispositif de mesure de distribution de particule par un procédé de dispersion laser.
